# EUROPÄISCHE PATENTSCHRIFT

(11) **EP 0 756 411 B1**
(45) Veröffentlichungstag und Bekanntmachung des Hinweises auf die Patenterteilung: **25.06.2003**
(21) Anmeldenummer: 96111725.6
(22) Anmeldetag: 20.07.1996
(51) Int. Cl.: H04M 3/42, H04M 3/36, H04M 7/00, H04Q 3/66, H04Q 3/00

(54) **Verfahren und Telekommunikationsnetz zur Steuerung von Massenanrufen**
Method and telecommunication network for controlling mass calls
Méthode et réseau de télécommunication pour commander des appels de masse

(30) Priorität: 28.07.1995 DE 19527759
(43) Veröffentlichungstag der Anmeldung: 29.01.1997
(73) Patentinhaber: ALCATEL, 75008 Paris (FR)
(72) Erfinder: Hollas, Markus, 70806 Kornwestheim (DE); Pham, Xuan Hy, 61250 Usingen (DE); Stratenberg, Gernot, 70839 Gerlingen (DE); Barnsteiner, Rupert, 70188 Stuttgart (DE); Wegner, Horst, 70439 Stuttgart (DE); Spildener, Kurt, 70435 Stuttgart (DE)
(74) Vertreter: Schätzle, Albin, Dipl.-Phys.

(56) Entgegenhaltungen:
- EP-A- 0 121 865
- EP-A- 0 426 355
- WO-A-95/14341
- US-A- 5 295 183

## Beschreibung

Die Erfindung betrifft ein Verfahren zur Steuerung von Massenanrufen gemäß dem Oberbegriff des Patentanspruchs 1 und ein Telekommunikationsnetz gemäß dem Oberbegriff des Patentanspruchs 8.

Massenanrufe zu Teilnehmern eines Telekommunikationsnetzes, hervorgerufen beispielsweise durch Umfragen oder Rätsel in Rundfunk und Fernsehen, können zu Engpässen oder zu Blockierungen innerhalb des Telekommunikationsnetzes führen. Es treten viele Kurzzeitbelegungen innerhalb eines begrenzten Zeitintervalls in den Vermittlungsstellen des Telekommunikationsnetzes auf, die wirtschaftliche Normalbelegungen verdrängen. Bei dem Betreiber des Telekommunikationsnetzes vorangekündigter Durchführung derartiger Aktionen ist die Verwendung von Drosselungsverfahren, beispielsweise Call Gapping oder Leaky Bucket aus der CCITT-Empfehlung E.412, zur Reduzierung oder Verhinderung von Engpässen und Blockierungen innerhalb des Telekommunikationsnetzes bekannt.

Solch ein Verfahren ist aus der Veröffentlichung WO95/14341 zu entnehmen. Es ist die Aufgabe der vorliegenden Erfindung, Engpässe oder Blockierungen innerhalb eines Telekommunikationsnetzes, die durch Massenanrufe zu Teilnehmern hervorgerufen werden, zu reduzieren oder zu verhindern.

Diese Aufgabe wird durch die technische Lehre des Patentanspruchs 1 oder des Patentanspruchs 8 gelöst.

Ein Grundgedanke der vorliegenden Erfindung ist darin zu sehen, daß Messungen zur Erkennung eines Massenanrufes zu einem Teilnehmer ausschließlich in denjenigen Vermittlungsstellen des Telekommmunikationsnetzes durchgeführt werden, an die Teilnehmer, die ein mögliches Ziel eines solchen Massenanrufes sein können, angeschlossen sind.

Vorteilhafterweise signalisiert die einen Massenanruf zu einem Teilnehmer erkennende Vermittlungsstelle dessen Auftreten jeweils vorgegebenen weiteren Vermittlungsstellen des Telekommunikationsnetzes. Jede dieser vorgegebenen weiteren Vermittlungsstellen und die den Massenanruf zu Teilnehmern erkennende Vermittlungsstelle drosselt den über sie zu diesem Teilnehmer geführten Verkehr auf eine für die jeweilige vorgegebene weitere Vermittlungsstelle festgelegte Drosselungsrate.

In einer vorteilhaften weiteren Ausgestaltung der Erfindung wird zunächst von der Vermittlungsstelle eine Tendenz für den Massenanruf erkannt, bevor die eigentliche Identifizierung desjenigen Teilnehmers, zu dem ein Massenanruf stattfindet, durchgeführt wird.

Weitere vorteilhafte Ausgestaltungen der Erfindung sind den abhängigen Patentansprüchen zu entnehmen.

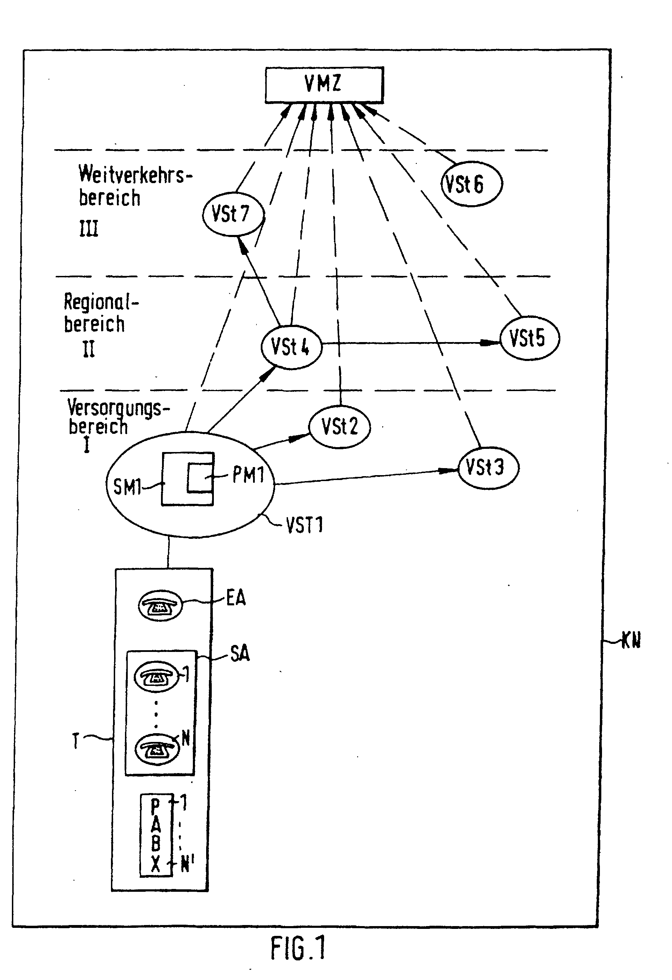

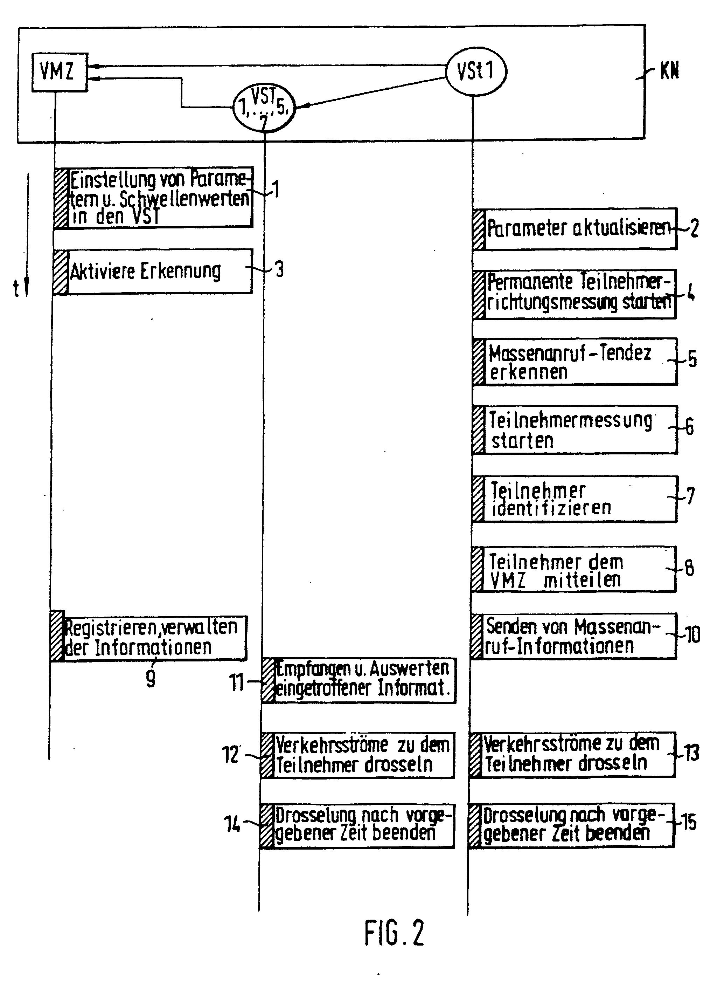

Im folgenden werden zur Verdeutlichung der Erfindung Ausführungsbeispiele anhand der Figuren 1 und 2 beschrieben. Es zeigen:
- Fig. 1: ein Ausführungsbeispiel eines erfindungsgemäßen Telekommunikationsnetzes und
- Fig. 2: ein Ausführungsbeispiel eines Ablaufdiagramms eines erfindungsgemäßen Verfahrens.

Ein in der Fig. 1 abgebildetes Ausführungsbeispiel zeigt ein Telekommunikationsnetz KN zur Steuerung von Massenanrufen zu Teilnehmern des Telekommunikationsnetzes KN. Massenanruf bedeutet, daß eine große Anzahl von Verbindungen zur gleichen Zeit zu einem Teilnehmer aufgebaut werden sollen. Diese Anzahl von aufzubauenden Verbindungen, die einen Massenanruf charakterisiert, hängt von der Struktur des Telekommunikationsnetzes ab. Beim Auftreten des Massenanrufes zu dem Teilnehmer kommt es zu Engpässen oder Blockierungen in dem Telekommunikationsnetz, so daß der normale Verkehr verdrängt wird.

Das Telekommunikationsnetz KN ist im vorliegenden Ausführungsbeispiel in einen Versorgungsbereich I, einen Regionalbereich II und einen Weitverkehrsbereich III unterteilt. Diese Einteilung ist für bestehende Telekommunikationsnetze üblich, für die Durchführung der Erfindung allerdings nicht notwendig. In dem Versorgungsbereich I sind drei Vermittlungsstellen VST1, VST2 und VST3 angeordnet. An diese Vermittlungsstellen sind jeweils eine Vielzahl von Teilnehmern angeschlossen, von denen im vorliegenden Ausführungsbeispiel stellvertretend der Teilnehmer T dargestellt ist, der an die Vermittlungsstelle VST1 angeschlossen ist. Der Teilnehmer T kann, wie in Fig. 1 dargestellt, eine Nebenstellenanlage PABX mit N' Anschlüssen, ein Sammelanschluß SA mit einer Vielzahl von Teilnehmerstationen 1, ..., N oder eine Teilnehmerstation EA, die als Einzelanschluß geschaltet sind, sein. In dem Regionalbereich II sind im vorliegenden Ausführungsbeispiel zwei Vermittlungsstellen VST4 und VST5 angeordnet. An diese Vermittlungsstellen VST4 und VST5 können weitere Teilnehmer angeschlossen sein, die in Fig. 1 nicht dargestellt sind. In dem Weitverkehrsbereich III sind im vorliegenden Ausführungsbeispiel ebenfalls zwei Vermittlungsstellen VST6 und VST7 vorhanden. An die Vermittlungsstellen VST6 und VST7 sind im vorliegenden Ausführungsbeispiel keine Teilnehmer angeschlossen. Das Telekommunikationsnetz KN weist des weiteren eine zentrale Steuereinrichtung VMZ auf. Die Vermittlungsstellen VST 1, ..., VST7 sind mittels nicht dargestellter Verbindungsleitungen miteinander vermascht. Die Vermittlungsstellen VST1, ..., VST7 besitzen jeweils ein Steuermittel, von denen stellvertretend das Steuermittel SM1 der Vermittlungsstelle VST1 in Fig. 1 abgebildet ist. Die Vermittlungsstellen VST1, ..., VST5, an die Teilnehmer, die mögliche Ziele eines Massenanrufes sein können, angeschlossen sind, weisen des weiteren ein in dem jeweiligen Steuermittel abgespeichertes Programmodul zur Steuerung von Massenanrufen auf. Stellvertretend ist in der Fig. 1 das Programmodul PM1 der Vermittlungsstelle VST1 dargestellt.

Die Vermittlungsstellen VST1, ..., VST7 übermitteln im vorliegenden Ausführungsbeispiel vorgegebene Informationen zur Erfassung und Auswertung und insbesondere für statistische Zwecke zu der zentralen Steuereinrichtung VMZ. Solche Informationen sind im vorliegenden Fall insbesondere einen Massenanruf zu einem Teilnehmer kennzeichnende Informationen. Die zentrale Steuereinrichtung VMZ ist für die Durchführung der vorliegenden Erfindung vorteilhaft, allerdings nicht notwendig. Es ist möglich, die Steuerung innerhalb des Telekommunikationsnetzes KN ausschließlich über eine Signalisierung zwischen den einzelnen Vermittlungsstellen des Telekommunikationsnetzes KN durchzuführen, und dabei auf die zentrale Steuereinrichtung VMZ zu verzichten. Es ist allerdings ebenso möglich, die Steuerung des Telekommunikationsnetzes KN ausschließlich über die zentrale Steuereinrichtung VMZ durchzuführen.

Im vorliegenden Ausführungsbeispiel erkennt die Vermittlungsstelle VST1 einen Massenanruf zu der als Einzelanschluß geschalteten Teilnehmerstation EA des an die Vermittlungsstelle VST1 angeschlossenen Teilnehmers T. Um geeignete Maßnahmen gegen das Auftreten des Massenanrufes treffen zu können, signalisiert die den Massenanruf erkennende Vermittlungsstelle VST1 weiteren Vermittlungsstellen des Telekommunikationsnetzes KN das Auftreten des Massenanrufes. In dem Steuermittel SM1 der Vermittlungsstelle VST1 ist dafür eine Liste mit Vermittlungsstellen abgespeichert, die bei dem Auftreten eines Massenanrufes benachrichtigt werden sollen. Diese zu benachrichtigenden Vermittlungsstellen sind im vorliegenden Ausführungsbeispiel die Vermittlungsstellen VST2, ..., VST5 und VST7. In den Steuermitteln der zu benachrichtigenden Vermittlungsstellen sind eventuell weitere zu benachrichtigende Vermittlungsstellen eingetragen. Das Auftreten des Massenanrufes wird ebenfalls der zentralen Steuereinrichtung VMZ signalisiert. Die Signalisierung des von der Vermittlungsstelle VST1 erkannten Massenanrufes wird in Fig. 1 durch Pfeile zu den zu benachrichtigenden Vermittlungsstellen verdeutlicht. Die Vermittlungsstellen VST5 und VST7 werden dabei über die Vermittlungsstelle VST4 von dem Auftreten des Massenanrufes informiert.

Im folgenden wird die Funktionsweise des Telekommunikationsnetzes KN zur Steuerung von Massenanrufen beschrieben. Dazu zeigt Fig. 2 ein Ausführungsbeispiel eines Ablaufdiagramms des erfindungsgemäßen Verfahrens zur Durchführung in dem Telekommunikationsnetz KN. Die durchzuführenden Verfahrensschritte sind in Fig. 2 nach dem Ort, in dem sie durchgeführt werden, also der den Massenanruf erkennenden Vermittlungsstelle VST1, den weiteren, vorgegebenen Vermittlungsstellen VST2, ..., VST5 und VST7 und der zentralen Steuereinrichtung VMZ, geordnet.

In einem Schritt 1 wird beispielsweise mittels eines an die zentrale Steuereinrichtung VMZ angeschlossenen Bedienterminals eine Einstellung von Parametern, die die Charakteristiken des erfindungsgemäßen Verfahrens beschreiben, eingegeben und zu den Vermittlungsstellen VST1, ..., VST7 des Telekommunikationsnetz KN übermittelt. Für das vorliegende Ausführungsbeispiel des erfindungsgemäßen Verfahrens werden insbesondere als Parameter ein Teilnehmerschwellenwert für die genaue Bestimmung des Zieles des Massenanrufes, ein Teilnehmerrichtungsschwellenwert für die Erkennung einer Massenanruf-Tendenz und Drosselungsraten für die Vermittlungsstellen des Telekommunikationsnetzes KN für den Fall eingegeben, daß bei Auftreten eines Massenanrufes die jeweilige Vermittlungsstelle den über sie geführten Verkehr zu dem betroffenen Teilnehmer, der Ziel des Massenanrufes ist, drosseln muß. Drosseln bedeutet dabei, daß die jeweilige Vermittlungsstelle den über sie geführten Verkehr zu dem Teilnehmer reduziert. Im vorliegenden Ausführungsbeispiel wird der Verkehr zu dem Teilnehmer auf eine vorgegebene Anzahl von weitervermittelten Anrufen pro Zeit, d. h. auf die vorgegebene Drosselungsrate, begrenzt. Die nicht weitervermittelten Anrufe werden an der Vermittlungsstelle abgewiesen. Den anrufenden Teilnehmerstationen wird ein Besetztzeichen übermittelt.

In einem Schritt 2 werden die in dem Schritt 1 eingegebenen Parameter jeweils in den Vermittlungsstellen aktualisiert. Daraufhin wird in einem Schritt 3 von der zentralen Steuereinrichtung VMZ aus die Erkennung eines Massenanrufes für das Telekommunikationsnetz KN aktiviert. In einem Schritt 4 wird von den Vermittlungsstellen VST1, ..., VST5, an die Teilnehmer, die mögliche Ziele eines Massenanrufes sein können, angeschlossen sind, mittels ihres Steuermittels und des darin abgespeicherten Programmoduls eine permanente Teilnehmerrichtungsmessung gestartet. Diese permanente Teilnehmerrichtungsmessung findet beispielsweise in einem Zeittakt von zehn Sekunden statt. Teilnehmerrichtungsmessung bedeutet dabei, daß zunächst nicht für alle an die jeweilige Vermittlungsstelle angeschlossenen Teilnehmer einzeln eine Messung zur Erkennung des Massenanrufes durchgeführt wird, sondern daß, um den Meßaufwand zu reduzieren, eine Gruppe von Teilnehmern zu einer Teilnehmerrichtung zusammengefaßt ist, für die eine Tendenz für den Massenanruf überprüft wird. Dazu wird in der jeweiligen Vermittlungsstelle die Anzahl der erfolgreichen Belegungen von Leitungen, die zu einer Verbindung mit dem gewünschten Teilnehmer führen, für die Teilnehmerrichtung und die Anzahl der Belegungsversuche für die Teilnehmerrichtung bestimmt. Die Belegungsversuche umfassen sowohl erfolgreiche als auch nicht erfolgreiche Belegungen, die an der jeweiligen Vermittlungsstelle für diese Teilnehmerrichtung eintreffen. Aus dem Quotienten der bestimmten Anzahl von erfolgreichen Belegungen und der bestimmten Anzahl der Belegungsversuche wird ein Teilnehmerrichtungswert festgelegt. In einem Schritt 5 wird anschließend dieser Teilnehmerrichtungswert mit dem Teilnehmerrichtungsschwellenwert verglichen und die Tendenz für den Massenanruf festgestellt, wenn der Teilnehmerrichtungswert den Teilnehmerrichtungsschwellenwert unterschreitet. Für die Zusammenfassung einer Gruppe von Teilnehmern zu einer Teilnehmerrichtung ist es beispielsweise möglich, die Rufnummer dieser Teilnehmer als Charakteristik für die Teilnehmerrichtung zu verwenden. So werden beispielsweise im vorliegenden Ausführungsbeispiel die Teilnehmer zu einer Teilnehmerrichtung zusammengefaßt, deren erste drei Ziffern der Rufnummer übereinstimmen. Es ist allerdings auch möglich, andere Kriterien für die Zusammenfassung von Teilnehmern zu einer Teilnehmerrichtung zu verwenden. Sollten in dem Schritt 5 mehrere Massenanruf-Tendenzen erkannt werden, so wird diejenige Massenanruf-Tendenz als die wichtigste festgelegt, die den niedrigsten Teilnehmerrichtungswert aufweist. Die in den Schritten 4 und 5 durchgeführte Erkennung der Tendenz eines Massenanrufes ist für die Durchführung der Erfindung nicht notwendig. Es kann auf sie verzichtet werden, so daß direkt der Massenanruf zu dem exakten Teilnehmer überprüft wird. Es ist des weiteren ebenfalls denkbar, daß die Verfahrensweise zur Erkennung der Tendenz des Massenanrufes auf eine andere Weise durchführbar ist.

Wurde in dem Schritt 5 eine Massenanruf-Tendenz von der Vermittlungsstelle VST1 für eine Teilnehmerrichtung erkannt, dann wird in einem Schritt 6 anschließend eine parallele Teilnehmermessung zur exakten Bestimmung des Teilnehmers, der Ziel des Massenanrufes ist, gestartet. Diese parallele Teilnehmermessung wird für die restlichen Ziffern der Rufnummern der zu der Teilnehmerrichtung zusammengefaßten Teilnehmer durchgeführt. In einem Schritt 7 wird der exakte Teilnehmer, der Ziel des Massenanrufes ist, identifiziert. Dazu wird ein Teilnehmerwert bestimmt, der sich aus dem Quotienten aus der Anzahl der erfolgreich zu dem Teilnehmer vermittelten Belegungen und der Anzahl aller für diesen Teilnehmer an der Vermittlungsstelle VST1 eingetroffenen Belegungsversuche ergibt. Für alle zu der Teilnehmerrichtung zusammengefaßten Teilnehmer wird also jeweils ein Teilnehmerwert bestimmt, der anschließend mit dem Teilnehmerschwellenwert verglichen wird. Unterschreitet der Teilnehmerwert den Teilnehmerschwellenwert, dann wird der Massenanruf zu diesem Teilnehmer erkannt. Werden mehrere Teilnehmer als Ziele von Massenanrufen erkannt, so wird derjenige Teilnehmer mit dem niedrigsten Teilnehmerschwellenwert als wichtigster Teilnehmer festgelegt. Es ist möglich, die Verfahrensweise zur Bestimmung des Teilnehmers, der Ziel des Massenanrufes ist, auf eine andere Weise durchzuführen.

In einem Schritt 8 wird daraufhin der in dem Schritt 7 erkannte Teilnehmer, der Ziel des Massenanrufes ist, in einer Liste der Vermittlungsstelle registriert und der zentralen Steuereinrichtung VMZ zusammen mit anderen, diesen Massenanruf betreffende Informationen übermittelt. Solche anderen, den Massenanruf betreffende Informationen können beispielsweise die Angabe der Vermittlungsstelle, die den Teilnehmer, der Ziel des Massenanrufes ist, ermittelt hat, die Angabe der Rufnummer des ermittelten Teilnehmers, die weiteren Vermittlungsstellen, die von dem Auftreten des Massenanrufes benachrichtigt werden und die Drosselungsrate sein, auf die der Verkehr zu dem Teilnehmer, der Ziel des Massenanrufes ist, gedrosselt wird. Die zentrale Steuereinrichtung VMZ empfängt in einem Schritt 9 die zu ihr übermittelten Informationen, die den erkannten Massenanruf betreffen, und speichert sie in einem Speicher zur weiteren Auswertung ab. In einem Schritt 10 werden von der den Massenanruf erkennenden Vermittlungsstelle VST1, die den erkannten Massenanruf betreffenden Informationen zu den vorgegebenen weiteren Vermittlungsstellen des Telekommunikationsnetzes KN übermittelt. Im vorliegenden Ausführungsbeispiel sind diese vorgegebenen weiteren Vermittlungsstellen alle benachbarten Vermittlungsstellen VST2, VST3, VST4 und VST5 der den Massenanruf erkennenden Vermittlungsstelle VST1 sowie alle Vermittlungsstellen des Weitverkehrsbereichs III, die absteigende Verkehre zu der Vermittlungsstelle VST1 führen, hier die Vermittlungsstelle VST7. Diese vorgegebenen weiteren Vermittlungsstellen sind in einer Liste der Vermittlungsstelle VST1 oder in Listen der vorgegebenen weiteren Vermittlungsstellen definiert, die veränderbar sind. In einem Schritt 11 empfangen die vorgegebenen weiteren Vermittlungsstellen die übermittelten, den erkannten Massenanruf betreffenden Informationen, speichern diese ab und werten sie insbesondere zur Bestimmung von Drosselungsparametern aus. In einem Schritt 12 starten die vorgegebenen weiteren Vermittlungsstellen die Drosselung des über sie zu dem Teilnehmer, der Ziel des Massenanrufes ist, geführten Verkehrs auf eine für diese jeweilige vorgegebene weitere Vermittlungsstelle festgelegte Drosselungsrate. In einem Schritt 13 wird gleiches von der den Massenanruf erkennenden Vermittlungsstelle VST1 durchgeführt. Die Drosselungsrate kann für jede Vermittlungsstelle des Telekommunikationsnetzes KN individuell festgelegt werden. Im vorliegenden Ausführungsbeispiel beträgt die Drosselungsrate für die Vermittlungsstellen des Versorgungsbereichs I und des Regionalbereichs II R_{D1} = X / (T x K). Dabei bedeutet R_{D1} die Drosselungsrate, X die Anzahl der Anschlüsse des Teilnehmers, der Ziel des Massenanrufes ist, T die mittlere Gesprächsdauer eines Anrufes zu dem Teilnehmer und K die Anzahl der Vermittlungsstellen im Versorgungsbereich I und im Regionalbereich II, die an der Drosselung des Verkehrs beteiligt sind. Für Vermittlungsstellen in dem Weitverkehrsbereich III beträgt die Drosselungsrate R_{D2} = X / (T x K x M). Dabei bedeutet R_{D2} die Drosselungsrate und M die Anzahl der Vermittlungsstellen im Weitverkehrsberich III. Die an der Drosselung des Verkehrs zu dem Teilnehmer, der Ziel des Massenanrufes ist, beteiligten Vermittlungsstellen des Telekommunikationsnetzes KN übermitteln ihre den Massenanruf betreffenden Informationen, und insbesondere ihre Drosselungsraten, der zentralen Steuereinrichtung VMZ.

Aufgrund der übermittelten Informationen kann die zentrale Steuereinrichtung VMZ eine Auswertung des erkannten Massenanrufes vornehmen. Es besteht die Möglichkeit, bei Bedarf eine Änderung der von den Vermittlungsstellen VST1, ..., VST5 und VST7 veranlaßten Drosselung der Verkehre zu dem Teilnehmer, der Ziel des Massenanrufes ist, durch die zentrale Steuereinrichtung VMZ vorzunehmen. Es ist ebenfalls möglich, daß ein Vergleich in der zentralen Steuereinrichtung VMZ zwischen der augenblicklichen Massenanruf-Situation und ähnlichen, aus der Historie bekannten Massenanruf-Situationen zu einem Korrekturvorschlag von seiten der zentralen Steuereinrichtung VMZ zur Steuerung des Massenanrufes führen kann. Diese vorgeschlagenen Änderungen zur Steuerung des Massenanrufes werden von der zentralen Steuereinrichtung VMZ den an der Drosselung beteiligten Vermittlungsstellen VST1, ..., VST5 und VST7 des Telekommunikationsnetzes KN signalisiert, die diese Vorschläge daraufhin direkt umsetzen. Die Auswirkungen der veranlaßten Änderungen zur Steuerung des Massenanrufes werden von den beteiligten Vermittlungsstellen der zentralen Steuereinrichtung VMZ gemeldet, die diese Auswirkungen daraufhin ebenfalls auswertet und gegebenenfalls erneut korrigiert. Diese beschriebene mögliche Veranlassung von Änderungen zur Steuerung des Massenanrufes sind für die Durchführung der Erfindung nicht notwendig, aber vorteilhaft, da auf diese Weise eine effektivere Steuerung des Massenanrufes möglich ist. Für die Drosselung des Verkehrs werden bekannte Drosselungsverfahren wie Leaky Bucket oder Call Gapping verwendet.

In den Schritten 14 und 15 wird die Drosselung des durch die jeweiligen Vermittlungsstellen geführten Verkehrs zu dem Teilnehmer, der Ziel des Massenanrufes ist, nach einer vorgegebenen Zeit, z. B. 30 Minuten, beendet. Diese vorgegebene Zeit zur Aufhebung der Drosselung ist veränderbar. Auf diese Weise wird eine mögliche fortlaufende Aktivierung und Deaktivierung der Drosselung in den Vermittlungsstellen vermieden.

## Patentansprüche

1. Verfahren zur Steuerung von Massenanrufen zu Teilnehmern (T) in einem Telekommunikationsnetz (KN) mit Vermittlungsstellen (VST1, ..., VST7),
bei dem eine der Vermittlungsstellen (VST1) den Massenanruf zu einem der Teilnehmer (T), der an diese Vermittlungsstelle (VST1) angeschlossen ist, erkennt und
bei dem eine Drosselung des Verkehrs zu diesem Teilnehmer (T), der Ziel des Massenanrufes ist, durchgeführt wird, **dadurch gekennzeichnet, daß**
bei dem ausschließlich in denjenigen Vermittlungsstellen (VST1, ..., VST5), an die ein Teilnehmer (T) angeschlossen ist, eine Erkennung des Massenanrufes durchgeführt wird.

2. Verfahren nach Anspruch 1,
**dadurch gekennzeichnet, daß** vorgegebenen weiteren Vermittlungsstellen (VST2, ..., VST5, VST7) des Telekommunikationsnetzes (KN) das Auftreten des Massenanrufes zu dem Teilnehmer (T) signalisiert wird und daß in den vorgegebenen weiteren Vermittlungsstellen der zu dem Teilnehmer (T) geführte Verkehr auf eine für die jeweilige vorgegebene weitere Vermittlungsstelle festgelegte Drosselungsrate gedrosselt wird.

3. Verfahren nach Anspruch 1,
**dadurch gekennzeichnet, daß** in der Vermittlungsstelle (VST1), an die der Teilnehmer (T) angeschlossen ist, ein Teilnehmerwert bestimmt wird, der sich aus dem Quotienten aus der Anzahl der erfolgreich zu dem Teilnehmer (T) vermittelten Belegungen und der Anzahl aller für diesen Teilnehmer (T) an der Vermittlungsstelle (VST1) eingetroffenen Belegungsversuche ergibt,
daß dieser Teilnehmerwert mit einem Teilnehmerschwellenwert verglichen wird und
daß der Massenanruf zu dem Teilnehmer erkannt wird, wenn der Teilnehmerwert den Teilnehmerschwellenwert unterschreitet.

4. Verfahren nach Anspruch 1,
**dadurch gekennzeichnet, daß** ein Teilnehmerrichtungswert bestimmt wird, der sich aus dem Quotienten aus der Anzahl der erfolgreich zu einer Teilnehmerrichtung vermittelten Belegungen und der Anzahl aller für diese Teilnehmerrichtung an der Vermittlungsstelle (VST1) eingetroffenen Belegungsversuche ergibt,
daß dieser Teilnehmerrichtungswert mit einem Teilnehmerrichtungsschwellenwert verglichen wird,
daß eine Tendenz für den Massenanruf erkannt wird, wenn der Teilnehmerrichtungswert den Teilnehmerrichtungsschwellenwert unterschreitet, und
daß die Erkennung des Massenanrufes zu dem Teilnehmer dann durchgeführt wird, wenn diese Tendenz für den Massenanruf erkannt wurde.

5. Verfahren nach Anspruch 1,
**dadurch gekennzeichnet, daß** die Drosselung des Verkehrs zu dem Teilnehmer (T) beendet wird, wenn eine vorgegebene Zeit nach dem Erkennen des Massenanrufes zu dem Teilnehmer vergangen ist.

6. Verfahren nach Anspruch 1,
**dadurch gekennzeichnet, daß** in dem Telekommunikationsnetz (KN) eine zentrale Steuereinrichtung (VMZ) vorhanden ist,
daß zwischen den Vermittlungsstellen (VST1, ..., VST7) eine Signalisierung durchgeführt wird und
daß der zentralen Steuereinrichtung (VMZ) nach der Erkennung des Massenanrufes zu dem Teilnehmer (T) vorgegebene, den Massenanruf zu dem Teilnehmer kennzeichnende Daten zur Auswertung übermittelt werden.

7. Verfahren nach Anspruch 6,
**dadurch gekennzeichnet, daß** von der zentralen Steuereinrichtung (VMZ) aufgrund der übermittelten, vorgegebenen Daten eine Änderung der veranlaßten Drosselung des Verkehrs veranlaßt wird.

8. Telekommunikationsnetz (KN) zur Steuerung von Massenanrufen zu Teilnehmern (T) des Telekommunikationsnetzes (KN)
mit Vermittlungsstellen (VST1, ..., VST7), die jeweils ein Steuermittel (SM1) aufweisen,
mit Teilnehmern (T), die an Vermittlungsstellen (VST1, ..., VST5) angeschlossen sind, **dadurch gekennzeichnet, daß** ein Programmodul (PM1), das ausschließlich in den Steuermitteln (SM1) derjenigen Vermittlungsstellen (VST1, ..., VST5) abgespeichert ist, an die einer der Teilnehmer (T) angeschlossen ist, wobei mittels des Programmoduls (PM1) eine Erkennung des
Massenanrufes zu einem der an die jeweilige Vermittlungsstelle (VST1, ..., VST5) angeschlossenen Teilnehmer (T) durchgeführt wird und eine Drosselung des Verkehrs zu demjenigen Teilnehmer (T) durchgeführt wird, zu dem der Massenanruf erkannt wird.

## Claims

1. Method for controlling mass calls to participants (T) in a telecommunication network (KN) with switching centers (VST1, ..., VST7),
in which one of the switching centers (VST1) recognizes the mass call to one of the participants (T) that is connected to this switching center (VST1), and in which a reduction of the traffic to this participant (T), which is the target of a mass call, is executed, **characterized in that** a recognition of the mass call is executed only in the switching centers (VST1, ..., VST5) to which a participant (T) is connected.

2. Method as claimed in Claim 1, **characterized in that** the occurrence of the mass call to the participant (T) is signaled to predefined further switching centers (VST2, ..., VST5, VST7) of the telecommunication network (KN), and that in the predefined further switching centers the traffic passed to the participant (T) is reduced to a reduction rate specified for the respective predefined further switching center.

3. Method as claimed in Claim 1, **characterized in that** in the switching center (VST1) to which the participant (T) is connected, a participant value is determined, derived from the quotient of the number of calls successfully switched to the participant (T) and the number of all call attempts received at the switching center (VST1) for this participant (T),
that this participant value is compared with a participant threshold value and
that the mass call to the participant is recognized when the participant value falls below the participant threshold value.

4. Method as claimed in Claim 1, **characterized in that** a participant route value is determined from the quotient of the number of calls successfully switched to a participant route and the number of all call attempts received at the switching center (VST1) for this participant route,
that this participant route value is compared with a participant route threshold value, that a tendency to the mass call is recognized when the participant route value falls below the participant route threshold value, and
that the recognition of the mass call to the participant is executed if this tendency to the mass call has been recognized.

5. Method as claimed in Claim 1, **characterized in that** the reduction of traffic to the participant (T) is terminated when a predefined time has passed after the recognition of the mass call to the participant.

6. Method as claimed in Claim 1, **characterized in that** a central control facility (VMZ) is present in the telecommunication network (KN),
that signaling is executed between the switching centers (VST1, ..., VST7) and that after the recognition of the mass call to the participant (T), predefined data identifying the mass call to the participant is transmitted to the central control facility (VMZ) for evaluation.

7. Method as claimed in Claim 6, **characterized in that** based on the transmitted predefined data, the central control facility (VMZ) instigates a change to the instigated traffic reduction.

8. Telecommunication network (KN) for controlling mass calls to participants (T) in the telecommunication network (KN)
with switching centers (VST1, ..., VST7), each possessing a control means (SM1),
with participants (T), which are connected to the switching centers (VST1, ..., VST5),
**characterized in that**
a program module (PM1), which is stored only in the control means (SM1) of those switching centers (VST1, ..., VST5) to which one of the participants (T) is connected, wherein by means of the program module (PM1) a recognition of the mass call to one of the participants (T) connected to the respective switching center (VST1, ..., VST5) is carried out and a reduction of the traffic to the participant (T) for which the mass call is recognized is executed.

## Revendications

1. Méthode destinée à commander des appels en masse à des abonnés (T) dans un réseau de télécommunication (RT) avec des centraux (CNT1, ..., CNT7),
par laquelle un des centraux (CNT1) détecte l'appel en masse à l'un des abonnés (T) qui est raccordé à ce central (CNT1) et
par laquelle est réalisé un étranglement du trafic vers cet abonné (T) qui est le destinataire de l'appel en masse, **caractérisée en ce qu'**une détection de l'appel en masse est réalisée exclusivement dans chaque central (CNT1, ..., CNT5) auquel est raccordé un abonné (T).

2. Méthode selon la revendication 1, **caractérisée en ce que** l'apparition de l'appel de masse à l'abonné (T) est signalée à d'autres centraux prédéfinis (CNT2, ..., CNT5, CNT7) du réseau de télécommunication (RT) et que dans les autres centraux prédéfinis est réduit le trafic dirigé vers l'abonné (T) à un taux d'étranglement déterminé pour chaque autre central.

3. Méthode selon la revendication 1, **caractérisée en ce que** dans le central (CNT1), auquel est raccordé l'abonné (T), est déterminée une valeur d'abonné qui résulte du quotient du nombre des prises transmises avec succès à l'abonné (T) et du nombre de toutes les tentatives de prises parvenues pour cet abonné (T) au central (CNT1),
que cette valeur d'abonné est comparée avec une valeur de seuil d'abonné et
que l'appel en masse à l'abonné est détecté si la valeur d'abonné est inférieure à la valeur de seuil d'abonné.

4. Méthode selon la revendication 1, **caractérisée en ce qu'**est déterminée une valeur de bloc d'abonnés qui résulte du quotient du nombre des prises transmises avec succès à un bloc d'abonnés et du nombre de toutes les tentatives de prises parvenues au central (CNT1) pour ce bloc d'abonnés,
que cette valeur de bloc d'abonnés est comparée avec une valeur de seuil de bloc d'abonnés,
qu'une tendance pour l'appel en masse est détectée si la valeur de bloc d'abonnés est inférieure à la valeur de seuil de bloc d'abonnés et
que la détection de l'appel en masse à l'abonné est réalisée si cette tendance a été détectée pour l'appel en masse.

5. Méthode selon la revendication 1, **caractérisée en ce que** l'étranglement du trafic vers l'abonné (T) est terminé après l'écoulement d'une période prédéfinie après la détection de l'appel en masse à l'abonné.

6. Méthode selon la revendication 1, **caractérisée en ce qu'**un dispositif de commande central (DCC) est présent dans le réseau de télécommunication (RT),
qu'une signalisation est exécutée entre les centraux (CNT1, ..., CNT7) et
que, après la détection de l'appel en masse à l'abonné (T), des données prédéfinies caractérisant l'appel en masse à l'abonné sont transmises pour analyse au dispositif de commande central (DCC).

7. Méthode selon la revendication 6, **caractérisée en ce qu'**une modification de l'étranglement ordonné du trafic est ordonnée par le dispositif de commande central (DCC) en raison des données prédéfinies transmises.

8. Réseau de télécommunication (RT) pour commander des appels en masse à des abonnés (T) du réseau de télécommunication (RT)
avec des centraux (CNT1, ..., CNT7) qui présentent chacun un moyen de commande (MC1),
avec des abonnés (T) qui sont raccordés aux centraux (CNT1, ..., CNT5), **caractérisé en ce qu'**un module de programme (MP1) est exclusivement enregistré dans les moyens de commande (MC1) de chaque central (CNT1, ..., CNT5) auxquels un des abonnés (T) est raccordé, dans lequel le module de programme (MP1) exécute une détection de l'appel en masse à un des abonnés (T) raccordé aux centraux (CNT1, ..., CNT5) et dans lequel est exécuté un étranglement du trafic à l'abonné (T) auquel l'appel en masse est détecté.
